Europäisches Patentamt

European Patent Office

Office européen des brevets

(19)

(11) Publication number: **0 125 735**
**B1**

(12) EUROPEAN PATENT SPECIFICATION

(45) Date of publication of patent specification: 24.08.88

(21) Application number: 84200676.9

(22) Date of filing: 10.05.84

(51) Int. Cl.⁴: **B 62 K 19/18, B 29 C 65/40**

(54) **Method for producing a permanent connection of the ends of at least two already finished metal tubes, particularly for the manufacture of a bicycle frame and a frame thus manufactured.**

(30) Priority: 11.05.83 NL 8301698

(43) Date of publication of application:
21.11.84 Bulletin 84/47

(45) Publication of the grant of the patent:
24.08.88 Bulletin 88/34

(84) Designated Contracting States:
AT BE CH DE FR GB IT LI LU NL SE

(56) References cited:
EP-A-0 079 575
FR-A-2 033 068
NL-A-7 706 692

(73) Proprietor: REYNOLDS ALUMINIUM HOLLAND B.V.
P.O. Box 30
NL-3840 AA Harderwijk (NL)

(72) Inventor: Van Wijngaarden, Hildo
Emdenmeen 53
NL-3844 EB Harderwijk (NL)

(74) Representative: van der Beek, George Frans et al
Nederlandsch Octrooibureau Johan de Wittlaan 15 P.O. Box 29720
NL-2502 LS 's-Gravenhage (NL)

Courier Press, Leamington Spa, England.

## Description

The invention relates to a method for the permanent connection of the ends of at least two already finished metal tubes, particularly for the manufacture of a bicycle frame, consisting in placing the ends of said tubes in the correct relative positions in a mould, particularly an injection moulding mould, closing the mould around the ends of the tubes and filling the mould with liquid plastics material, so that after the setting of the plastics material and the opening of the mould the ends of the tubes are joined together by a lug of plastics material, whereby before the mould is filled with plastics material a fitting metal insert is applied.

A method of this kind is shown in EP—A—0079575 not-published before the priority date of the present application and makes it possible to produce a frame, particularly a bicycle frame, from completely finished metal frame tubes, such as painted steel tubes or anodised aluminium tubes, without the finish coating of the frame tubes being damaged through their connection. Each insert consists of a metal tube against which the ends of the metal tubes to be joined abut.

The connector or lug between two or more frame tubes is thus always formed by a moulding of plastics material, such as polyamide and a metal tube as insert.

Although this method of connection offers advantages over conventional methods hitherto used, whereby the tube ends were fastened in metal lugs by brazing or the like, it also has disadvantages.

Thus, the connections are not always stable in respect of shape unless the lugs are made very thick, in which case the frame has an external bulge.

This reduced stability of shape is felt above all at the ball head of a bicycle, because there the mutual distance between the ends of the frame tubes is considerable. Here the generally known metal upper ball head lug, the metal bottom ball head lug, and the metal outer ball head tube are replaced by one lug in the form of a moulding of plastics material with a metal tube as insert.

In the case of the joint at the location of the saddle it is necessary to insert in the lug of plastics material a special piece of metal tubing, provided with a slot, for the saddle post in order to be able to fasten the saddle at various heights.

The invention seeks to provide a method the type mentioned above, which however has a better stability and strength. This aim is achieved according to the features of claim 1.

The metal insert serves mainly for the transmission of forces. The frame tubes, which are already completely finished, need merely be pushed onto the fitting projections according to the features of claim 4. In addition, the insert with projections facilitates the positioning of the tube ends in relation to each other, and also effects the closing of the ends of the frame tubes.

A special mould and a special insert must obviously be used for each connection which is to be made.

Thus, in case of a bicycle frame, the insert for the ball head, for example, consists of a lengthy steel tube, which forms the outerball head tube and at least two tube stumps or solid pieces welded thereto, onto which the ends of the frame tubes are pushed.

The insert may also be separately cast in metal.

The invention can obviously be applied to all possible tube connections.

The combination of aluminium tubes and lugs of plastics material with metal insert gives a very light and very strong frame.

Through the use of the metal insert with projections, the thickness of the plastics lug can be reduced, so that the lug has a more elegant shape.

It may be observed that moulded lugs with a tubular steel insert are also known from Dutch Patent Application No. 7706692.

In that case each lug consists of a metal casting and the insert is not used to position the tube ends during the casting, since no projections are provided for.

Moreover, a metal diecasting mould is very expensive and has a limited life of a maximum of 200,000 castings.

At the site of the connection the tube material is annealed by the casting process, so that there is a loss of strength.

The castings must then be deburred.

In order to avoid a bulge on the exterior of the lug, the tube ends are specially tapered, so that additiomnal difficult machining is required.

The invention will be explained more fully with the aid of the drawing, in which:

Figure 1 shows as an example a side view of a men's bicycle having a frame according to the invention;

Figure 2 is a section on a larger scale of the ball head of this bicycle;

Figure 3 is a section on a larger scale of the saddle post lug;

Figure 4 is a section of the crank lug;

Figure 5 is a cross-section of a frame tube for the frame according to the invention, and

Figure 6 is a side view of the frame tube according to Figure 5, provided with a reflector strip.

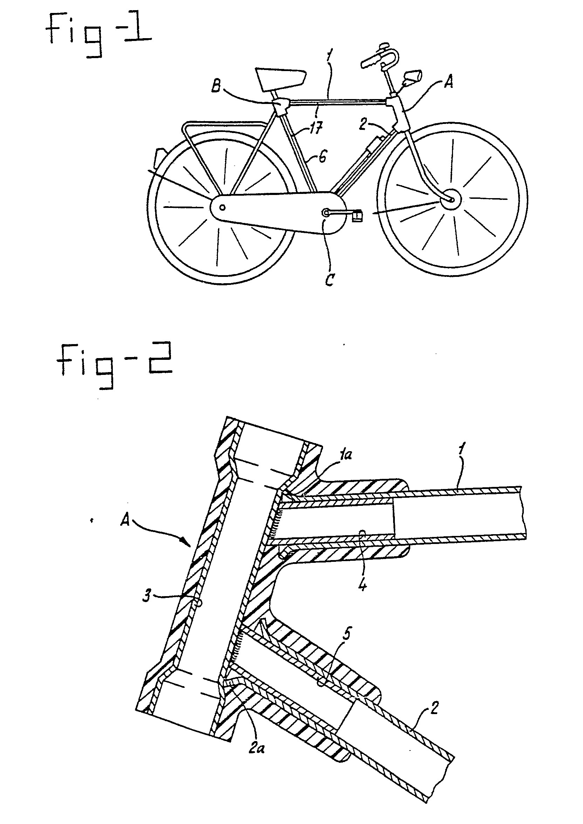

Figure 1 shows a side view of a men's bicycle in which the ball head lug is designated A, the saddle post lug is designated B, and the crank lug is designated C.

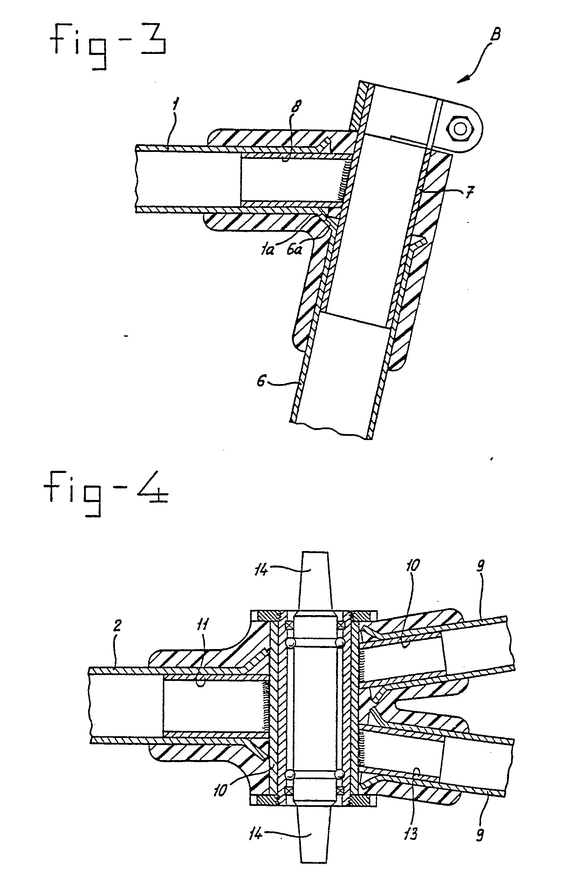

Figure 2 shows a section of the ball head lug A.

At the site of the ball head a connection must be made between two frame tubes 1 and 2 respectively, and accommodation must be provided for the inner ball head tube in which the steering mechanism is mounted.

The frame tubes 1 and 2 preferably consist of extruded aluminium and are completely finished, preferably anodised, in advance. The ends of the tubes 1 and 2 are flared out or otherwise shaped at 1a and 2a respectively, in order to ensure better fastening in the plastics lug which is to be applied by moulding.

The outer ball head tube is formed by a steel tube 3, to which two tube stumps 4 and 5 have been fastened by welding, these tube stumps also preferably being of steel. The tube parts 3, 4 and 5 form a metal insert. It is obviously also possible to produce the insert by casting in metal. In addition, it is possible to use solid stumps instead of tube stumps 4 and 5.

The outside diameter of the tube stumps 4 and 5 is such that the ends of the tubes 1 and 2 can be pushed onto them with a close fit.

The injection mould used is not shown in the drawings, but is of a conventional type. The insert 3, 4, 5, with the tubes 1 and 2 respectively fitted on it, is placed in the correct position in the injection mould, the tubes 1 and 2 being pushed on so far that the ends 1a and 2a respectively bear against the wall of the outer ball head tube 3.

The injection mould is then closed in the conventional manner and a suitable plastics material, such as polyamide, is introduced. After setting has taken place, the injection mould can be opened, and a connection is obtained of the type shown in Figure 2. No further processing is required, and a good mounting is provided for the ball or roller bearings (not shown) of the steering mechanism of the bicycle.

The metal insert, which is preferably made of steel, is very well able to transmit forces between the tubes 1 and 2 and the front wheel.

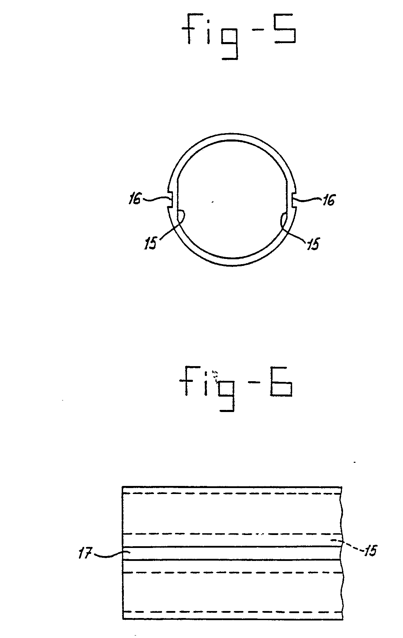

Figure 3 shows the connecting lug B at the site of the saddle. At this point a connection must be made between the horizontal frame tube 1 and the frame tube 6 extending upwards from the crank. Here again the insert consists of a steel tube 7 to which is welded a tube stump 8, onto which the end of the frame tube 1 is pushed. The flared portions 1a and 6a respectively once again abut one against the other.

The top end of the steel insert tube 7 is split in known manner in order to be able to clamp the saddle post. Through the presence of this steel insert tube 7 good support is provided for the saddle post.

Figure 4 shows the connecting lug at the site of the crank. This Figure is a section taken on a broken line.

Here a connection is made between the frame tube 6 (not shown here) coming from the saddle post, the frame tube 2 extending to the ball head and the legs 9 of the rear fork. Figure 4 is a section taken on a broken line through the axes of the tubes 2 and 9.

Here again the insert consists of a steel tube 10 with steel tube stumps 11, 12 and 13 welded transversely to it, together with a tube stump (not shown) for the frame tube 6. The crank with its mounting is conventional and indicated as a whole by the reference 14.

It will be clear that instead of flarings it is possible to provide other shaped portions on the frame tubes in order to ensure good fastening in the plastics lug. These shaped portions may for example consist of ribs or else holes in the tube ends, in which the plastics material can find a firm grip.

Although a very good connection is made by joining metal frame tubes and plastics lugs with the aid of a metal insert, the torsional stiffness of the whole joint can be further improved if the tube stumps of the inserts are flattened and the frame tubes are provided with flat internal surfaces — see Figure 5 — or by other means. Since the frame tubes preferably consist of aluminium and are produced by extrusion, the cross-section of the frame tube may have any desired shape without difficulties being encountered in manufacture. Thus, the frame tube shown in Figure 5 is provided with two flat internal surfaces 15. It is however possible to provide more flat surfaces or other shapes differing from the circular. These flat surfaces lie against flats on the tube stumps of the inserts. The frame tubes can also have a polygonal cross-section.

Because of manufacture by extrusion, it is also possible without difficulty to provide grooves on the outside of the frame tubes, such as those designated 16 in Figure 5.

At the site of the plastics lug, plastics material will penetrate into these grooves 16 during the moulding, so that the mutual connection between the metal frame tubes is further improved.

These grooves can however also be used for another very important purpose. If in fact a reflecting plastics strip 17, which is known per se and is obtainable commercially, is inserted into these grooves, it will be possible to provide the bicycle with reflecting properties along the frame tubes, so that the bicycle will be more easily visible in the dark — see Figure 1. These reflecting strips 17 can of course also be fitted to the front and rear forks. Since the grooves 16 are situated exactly in the two side surfaces of the bicycle, the reflecting strips 17 will lie precisely in the right position.

The wheel rims may also if desired be made reflecting, so that the entire bicycle will be very safe in traffic.

Although a men's bicycle has been discussed as an example, it will be clear that the invention is applicable to all types of bicycle.

**Claims**

1. Method for the permanent connection of the ends of at least two already finished metal tubes (1, 2: 1, 6; 2, 9), particularly for the manufacture of a bicycle frame, consisting in placing the ends of said tubes in the correct relative positions in a mould, particularly an injection moulding mould, closing the mould around the ends of the tubes and filling the mould with liquid plastics material, so that after the setting of the plastics material and the opening of the mould the ends of the tubes are joined together by a lug of plastics material, whereby before the mould is milled with plastics material a fitting metal insert is applied, in which each insert consists of a tubular steel part (3, 7, 10) and fastened thereto, one or more projections (4, 5; 8; 11; 12; 13) in the form of steel tube or rod stumps, onto which the ends of said tubes (1, 2; 1, 6; 2,9) are pushed with a close fit as far as a stop.

2. Method according to claim 1, characterised in that each insert is formed by casting in metal.

3. Method according to claim 1 or 2, characterised in that the outer surfaces of the projections (4, 5; 8; 11; 12; 13) of each insert and the inner surfaces of the metal tubes (1, 2; 1, 6; 2, 9) which are to be joined together are provided with means (15) which cooperate with one another and which prevent the turning of the tube ends relative to the insert.

4. Frame consisting of completely finished metal frame tubes (1, 2; 1, 6; 2, 9) and plastics lugs produced according to the method of claim 1, in which each plastics lug contains a metal insert onto which the ends of the metal frame tubes are pushed with a close fit as far as a stop.

5. Frame tube for a frame according to claim 4, which is produced by extrusion from aluminium or the like, characterised in that the frame tubes (1, 2; 1, 6; 2, 9) are provided on the inside with means such as flats (15).

6. Frame tube for a bicycle according to claim 5, characterised in that grooves (16) extending diagonally opposite one another in the longitudinal direction are formed on the outside of the frame tube.

7. Bicycle provided with a frame according to claim 6 characterised in that at least the frame is provided on its two longitudinal sides with light reflecting strips, for example of plastics material, which are fitted in the grooves (16) in the frame tubes.

## Patentansprüche

1. Verfahren zur dauerhaften Verbindung der Enden von mindestens zwei bereits fertig bearbeiteten Metallrohren (1, 2; 1,6; 2, 9), insbesondere zur Herstellung eines Fahrradrahmens, bei welchem die Enden der Rohre in genauen Lagen zueinander in eine Form, insbesondere eine Spritzgußform, eingelegt werden, die Form um die Enden der Rohre geschlossen und diese mit flüssigen Plastik-Material gefüllt wird und nach dem Aushärtem des Plastik-Materilas und Öffnen der Form die Enden der Rohre durch einen Anguß aus Plastik-Material miteinander verbunden sind und vor dem Füllen der Form mit Plastik-Material ein Anschlußeinsatz aus Metall angebracht wird, wobei jeder Einsatz aus einem rohrförmigen Stahlstück (3, 7, 10) besteht, an dem ein oder mehrere vorragende Ansätze (4, 5; 8; 11; 12; 13) in Form von Stahlrohren oder Stangenstümpfen befestigt ist bzw. sind, an denen die Enden der genannten Rohre (1, 2; 1, 6; 2, 9) durch Schub bis zu einem Anschlag mit Festsitz angebracht sind.

2. Verfahren nach Anspruch 1, dadurch gekennzeichnet, daß jeder Einsatz durch Gießen aus Metall hergestellt wird.

3. Verfahren nach Anspruch 1 oder 2, dadurch gekennzeichnet, daß die äußeren Oberflächen der vorragenden Ansätze (4, 5; 8; 11; 12; 13) eines jeden Einsatzes und die inneren Oberflächen der Metallrohre (1, 2; 1, 6; 2, 9), welche miteinander zu verbinden sind, mit Mitteln (15) versehen sind, welche miteinander zusammenwirken und ein Drehen der Rohrrenden gegenüber dem Einsatz verhindern.

4. Rahmen bestehend aus fertig bearbeiteten Metallrahmenrohren (1, 2; 1, 6; 2, 9) und Angüssen aus Plastik-Material, hergestellt nach dem Verfahren nach Anspruch 1, bei dem jeder Anguß aus Plastik-Material einen Einsatz aus Metall enthält, an denen die Enden der Metallrahmenrohre durch Schub bis zu einem Anschlag mit Festsitz angebracht sind.

5. Rahmenrohr für einen Rahmen nach Anspruch 4, hergestellt durch Extrusion von Aluminium od.dgl., dadurch gekennzeichnet, daß die Rahmenrohre (1, 2; 1, 6; 2, 9) innen mit Mitteln, wie Flachstellen (15) versehen sind.

6. Rahmenrohr für ein Fahrrad nach Anspruch 5, dadurch gekennzeichnet, daß Nuten (16), welche in Längsrichtung diagonal einander gegenüberliegen, an der Außenseite des Rahmenrohres vorgesehen sind.

7. Fahrrad, welches einen Rahmen nach Anspruch 6 aufweist, dadurch gekennzeichnet, daß mindestens der Rahmen an seinen beiden Längsseiten mit Lichtreflektionsstreifen ausgerüstet ist, z.B. aus Plastik-Material, welche eingefügt sind in die Nuten (16) der Rahmenrohre.

## Revendications

1. Méthode pour la liaison à demeure des extrémités d'au moins deux tubes métalliques préalablement finis (1, 2; 1, 6; 2, 9), en particulier pour la fabrication d'un cadre de bicyclette, consistant à mettre en place les extrémités desdits tubes dans les positions relatives correctes dans un moule, en particulier un moule à injection, à fermer le moule autour des extrémités des tubes et à remplir le moule avec une matière plastique liquide, de manière qu'après la prise de la matière plastique et l'ouverture du moule, les extrémités des tubes soient réunies par une gaine de matière plastique, une pièce métallique encastrée de raccordement étant appliquée avant que le moule soit rempli avec la matière plastique, dans lequel, chaque pièce encastrée est constituée par une partie en acier tubulaire (3, 7, 10) fixée à une ou plusieurs projections (4, 5; 8; 11; 12; 13) se présentant sous la forme d'un tube en acier ou de bouts de tiges, sur lesquels les extrémités desdits tubes (1, 2; 1; 6; 2, 9) sont poussées à ajustage serré jusqu'a former un blocage.

2. Méthode selon la revendication 1, caractérisée en ce que chaque pièce encastrée est formée par coulée de métal.

3. Méthode selon la revendication 1 ou 2, caractérisée en ce que les surfaces extérieures des projections (4, 5; 8; 11; 12; 13) de chaque pièce encastrée et les surfaces intérieures des tubes métalliques (1, 2; 1, 6; 2, 9) qui sont réunies entre elles sont munies de moyens (15) qui coopèrent entre eux et qui empêchent les extrémités des tubes de tourner par rapport à la pièce encastrée.

4. Cadre constitué de tubes de cadre métalliques complètement finis (1, 2; 1, 6; 2, 9) et de gaines en matière plastique obtenu selon la méthode de la revendication 1, dans lequel chaque gaine en matière plastique est constituée d'une pièce encastrée métallique sur laquelle les extrémités des tubes du cadre métalliques sont poussées à ajustage serré jusqu'à former un blocage.

5. Tube de cadre pour un cadre selon la revendication 4, qui est obtenu par extrusion d'aluminium ou analogue, caractérisé en ce que les tubes du cadres (1, 2; 1, 6; 2, 9) sont munis à l'intérieur de moyens tels que des méplats (15).

6. Tube de cadre pour une bicyclette selon la revendication 5, caractérisé en ce que des rainures (16) s'étendant en diagonale à l'une de l'autre dans le sens longitudinal sont ménagées à l'extérieur du tube du cadre.

7. Bicyclette munie d'un cadre selon la revendication 6, caractérisée en ce qu'au moins le cadre est muni sur ses deux côtés longitudinaux de bandes réfléchissant la lumière, par exemple en matière plastique, qui sont fixées dans des rainures (16) ménagées dans les tubes du cadre.

Fig -1

Fig -2

Fig-3

Fig-4

# Fig-5

# Fig-6